# EUROPEAN PATENT SPECIFICATION

(11) **EP 4 230 462 B1**
(45) Date of publication and mention of the grant of the patent: **04.06.2025**
(21) Application number: 22157553.3
(22) Date of filing: 18.02.2022
(51) Int. Cl.: B60K 37/10

(54) **ENTERTAINMENT SYSTEM FOR A VEHICLE AND VEHICLE**
UNTERHALTUNGSSYSTEM FÜR EIN FAHRZEUG SOWIE FAHRZEUG
SYSTÈME DE DIVERTISSEMENT POUR VÉHICULE ET VÉHICULE

(43) Date of publication of application: 23.08.2023
(73) Proprietor: Volvo Car Corporation, 40531 Göteborg (SE)
(72) Inventor: WICKMAN, Casper, 40531 Göteborg (SE); MOBERG, Patrik, 40531 Göteborg (SE)
(74) Representative: Maiwald GmbH

(56) References cited:
- WO-A1-2008/153524
- WO-A1-2017/095852

## Description

The present invention relates to an entertainment system for a vehicle.

Moreover, the present invention relates to a vehicle comprising an entertainment system.

Vehicles comprising entertainment systems are known.

WO 2008/153524 A1, for example, discloses an entertainment system according to the preamble of claim 1.

In the context of partially of fully autonomously driving vehicles, the importance of entertainment systems increases since the occupants of the vehicle are less occupied by driving and/or supervising the vehicle.

It is, thus, an objective of the present invention to improve known entertainment systems and vehicles being equipped therewith. In doing so, the ride in a partially of fully autonomous vehicle shall be rendered more enjoyable for the occupants of the vehicle.

The problem is at least partially solved or alleviated by the subject matter of the independent claims of the present invention, wherein further examples are incorporated in the dependent claims.

According to the subject-matter of claim 1, there is provided an entertainment system for a vehicle. The entertainment system is configured for providing a video game to an occupant of the vehicle.

It is noted that the terms first communication interface and second communication interface are used for the ease of explanation only. A number of communication interfaces is not implied by these terms.

Via the first communication interface, a mobile device such as a mobile phone, a smart watch, a tablet or a laptop computer may be connected to the data processing unit. For instance, the first communication interface may be configured for wirelessly connecting the mobile device to the data processing unit. To this end, the first communication interface may comprise a wireless communication unit. The wireless communication unit may be a WiFi unit or a Bluetooth unit such that the mobile device may be communicatively connected to the data processing unit via WiFi or Bluetooth.

The mobile device may be used as a user interface, graphical user interface (GUI) or human machine interface (HMI). In this context, the mobile device may serve as an input and/or output device for the video game software running on the data processing unit. The first communication interface may be configured for transmitting audio and video data. Thus, the present invention uses the fact that nowadays nearly every user of a vehicle carries a mobile device. The occupants are accustomed to using the mobile device within the car. Consequently, the first communication interface offers a simple and convenient connection to the data processing unit which leads to a convenient provision of interaction with the video game software running on the data processing unit.

Using the second communication interface, information relating to objects being recognized in the surroundings of the vehicle may be communicated to the data processing unit. This information can be used and/or processed by the data processing unit. More specifically, the information relating to objects being recognized in the surroundings of the vehicle may be used in the video game software and thus in a video game being provided to the occupant. The video game which is essentially virtual, thus, comprises elements corresponding to the real surroundings of the vehicle. On a more abstract level, the video game is able to connect the virtual world and the real world, i.e. the surroundings of the vehicle. This makes the video game interesting and entertaining for the occupants of the vehicle. A user of the partially or fully autonomous vehicle is able to enjoy entertainment of high quality. This is an advantage that creates an added value for the user. Moreover, the use of elements from the real surroundings of the vehicle may reduce motion sickness or car sickness of an occupant which essentially is caused by differences between a perceived virtual world and a real world.

It is noted that the second communication interface of the entertainment system is configured for receiving data or information relating to detected objects. In other words, the second communication interface is configured for receiving data relating to attributes of one or more detected objects. In an example, the second communication interface is configured for receiving classified object data as an input.

Moreover, in the context of the present invention, the object recognition unit may be an object recognition unit also being used for an autonomous driving functionality of the vehicle. Thus, connecting the object recognition unit to the data processing unit via the second communication interface constitutes a second use of the object recognition unit. This has a positive effect on a business case of the object recognition unit which may comprises several sensor units and which may be rather expensive. In a case in which the object recognition unit uses more than one sensor unit for recognizing objects, the object recognition unit may also be designated as a sensor fusion unit.

In the context of the present invention, the data processing unit may be called a game engine.

The data processing unit may be configured for receiving and processing data in real time. This may especially be the case for data being received via the second communication unit. Thus, the data processing unit may be able to provide a real-time gaming environment. This further reduces car sickness or motion sickness of the occupants and enhances the level of entertainment.

According to an example, the entertainment system comprises a mechanical mounting interface being mechanically connected to the data processing unit and being connectable to a structure of the vehicle. In other words, the data processing unit may be fixedly mounted in the vehicle.

As has been explained before, the object recognition unit of the entertainment system may be shared with a system for partially or fully autonomously driving the vehicle. Beyond that, the effects and advantages which have already been explained in connection with the second communication interface apply mutatis mutandis to the entertainment system having an object recognition unit.

In an example, the first communication interface and the data processing unit are integrated, i.e. the data processing unit and the first communication interface are realized as a single unit. For example, the data processing unit and the first communication interface are formed as one mechanical unit. Consequently, the entertainment system is simple in design and compact.

In another example, the second communication interface and the data processing unit may be integrated, i.e. formed as a single unit. As before, the second communication interface and the data processing unit may be formed as one mechanical unit. Also in this example, this leads to a simple and compact design of the entertainment system.

In the context of the present invention, the object identification unit is to be understood as a means being configured for identifying known objects, e.g. vehicles, such as a car, a truck, a motorbike, a bicycle, a pedestrian, a house, a bridge, a crash barrier, lane markings, bushes, street lights, etc. An object classification unit is a means being configured for attributing identified objects to different classes, e.g. traffic participant, infrastructure, moving, non-moving. Consequently, identification data and classification data being related to recognized objects may be received by the data processing unit via the second communication interface. According to the invention, due to this data , the recognized objects may be used within the video game being provided to the occupant. In doing so, the entertainment level is further increased. Additionally, car sickness and motion sickness is effectively mitigated.

In an example, the object recognition unit is communicatively connected to an environment detection unit. Thus, the object recognition unit is configured for detecting objects in the surroundings of the vehicle by using data describing the environment of the vehicle as an input. The environment detection unit may comprise at least one of a radar unit, a camera unit, a lidar unit and an ultrasound unit. Thus, objects in the surroundings of the vehicle may be recognized with high efficiency and reliability.

In an example, the environment detection unit and the object recognition unit may be formed as a single, integrated unit. In this example, the environment detection unit and the object recognition unit may be compact.

In a further example, the entertainment system may comprise an audio interface being communicatively connected to the data processing unit and being configured for communication with sound system of vehicle. Thus, when using the video game software, the sound system of the vehicle may be used as an audio output.

In an example, the entertainment system may comprise a third communication interface being communicatively connected to the data processing unit and being configured for communicatively connecting a vision sensor unit of the vehicle to the data processing unit. As before, the term third communication interface serves the ease of explanation only. No number of communication interfaces is implied. Consequently, the data processing unit may receive image data relating to standing or moving images showing the surroundings of the vehicle. This data may be used in the video game being provided to the occupant. The entertainment level, thus is further enhanced and motion sickness or car sickness further mitigated.

In an example, a vision sensor unit is communicatively connected to the third communication interface. The vision sensor unit may comprise one or more camera units. The effects and advantages which have been explained in connection with the third communication interface apply mutatis mutandis to the entertainment system having a vision sensor.

In an example, the first communication interface may be configured for communicatively connecting a plurality of mobile devices to the data processing unit. Alternatively, the entertainment system may comprise a plurality of first communication interfaces. Consequently, more than one mobile device may be communicatively connected to the data processing unit on which the video game software is running. Thus, more than one occupant can use the entertainment system either by playing individually or by playing together. In other words, the entertainment system is a multiplayer device. It is noted that all the players need to be inside the vehicle.

In an example, the entertainment system may comprise at least one mobile device being communicatively connected to the data processing unit via the first communication interface. All the effects and advantages which have been explained in connection with the first communication interface apply mutatis mutandis to the entertainment system having at least one mobile device. It is noted that in this case also interfaces of the mobile device may be used, e.g. an audio interface to which a headphone or headset may be connected.

In an example, the entertainment system may comprise a fourth communication interface being communicatively connected to the data processing unit and being configured for communicatively connecting a data processing unit of another vehicle to the data processing unit. In other words, the fourth communication interface is configured for allowing vehicle to vehicle (V2V) communication. Consequently, detection results being detected by sensor units of another vehicle may be received and used in the data processing unit. It is of course also possible to communicate data to the other vehicle. Thus, objects being recognized by the other vehicle or for example a road friction parameter being detected by the other vehicle may be used in the data processing unit and integrated into the video game being provided to the occupant thereof. Consequently, the level of entertainment may be further enhanced.

In an example, the entertainment system may comprise a fifth communication interface being communicatively connected to the data processing unit and being configured for communicatively connecting a cloud unit to the data processing unit. The cloud unit may comprise at least one of a cloud storage unit and a cloud computing unit. Since the data processing unit is used for providing a video game, the cloud unit may be designated as a game cloud. The game cloud may be used for storing and processing data being generated when using the video game. The advantage of the fifth communication interface and the cloud unit is that game data may easily be shared with others.

In an example, the entertainment system may comprise a cloud unit being communicatively connected to the data processing unit via the fifth communication interface. The effects and advantages which have already been explained in connection with the fifth communication interface also apply to the entertainment system having a cloud unit.

In an example, the cloud unit may comprise a first cloud interface being configured for communicatively connecting a computing device being located outside the vehicle to the cloud unit. Via this connection, the video game may also be provided to a player being located outside the car. Such a player may be called an external player. In other words, an external player may participate in the video game. Moreover, using the first cloud interface, the cloud can handle multiplayer games across vehicles. To this end, the cloud interface may be configured as an application programming interface (API).

In an example, the cloud unit may comprise a second cloud interface being configured for communicatively connecting a game provider system to the cloud unit. Thus, via the cloud unit, the data processing unit can communicate with a game provider. Consequently, so-called online games may be provided to the occupants of the vehicle. Alternatively or additionally, video game software may be provided by the game provider system. The video game software may be downloaded on the data processing unit. Consequently, a video game being provided to the occupants of the vehicle may be individually selected.

In an example, the entertainment system may comprise a sixth communication interface being communicatively connected to the data processing unit and being configured for communicatively connecting a third party system to the data processing unit. The third party system may be configured for providing data or information to the data processing unit which may be used in the video game being provided to the occupants of the vehicle. The communication between the third party system and the vehicle may be designated as X2V communication.

In an example, the third party system is a weather data system. Thus, weather data can be supplied to the data processing unit and can be used in the video game. Thus, for example, in case of snowy weather, a snowy environment can be selected for the video game. In another example, the third party system is a map service. Consequently, map data can be used in the video game.

According to a second aspect, there is provided a vehicle having an entertainment system according to the present invention. In such a vehicle, a high level of entertainment is provided to the occupants. Furthermore, due to the entertainment system, the risk that an occupant suffers from motion sickness or car sickness is reduced.

In an example, the vehicle may be a partially or fully autonomous vehicle comprising an object recognition unit which is used for the autonomous driving functionality of the vehicle. The entertainment system uses the same object recognition unit. Thus, the object recognition unit may be designated as a shared object recognition unit.

It should be noted that the above examples may be combined with each other irrespective of the aspect involved. Accordingly, the entertainment system may be combined with features of the vehicle and, likewise, the vehicle may be combined with features of the entertainment system.

These and other aspects of the present invention will become apparent from and elucidated with reference to the examples described hereinafter.

Examples of the invention will be described in the following with reference to the following drawings.
- Fig. 1: shows a vehicle according to the present invention comprising an entertainment system according to the present invention,
- Fig. 2: shows a mobile device of an entertainment system of the present invention being used for playing a video game, and
- Fig. 3: shows the entertainment system of Figure 1 in more detail.

The figures are merely schematic representations and serve only to illustrate examples of the invention. Identical or corresponding elements are in principle provided with the same reference signs.

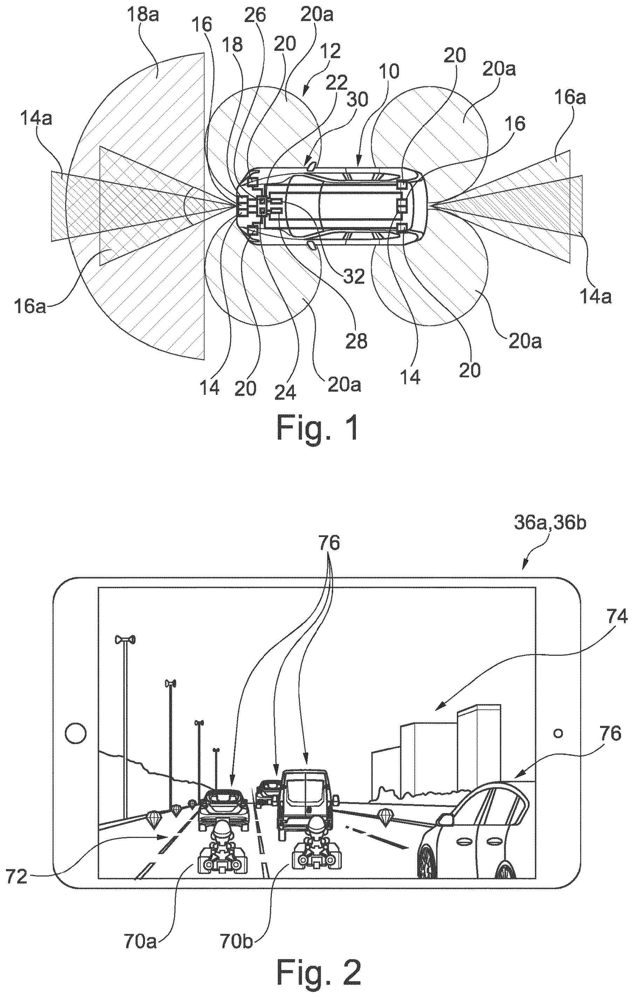

Figure 1 shows a vehicle 10 which is configured as an autonomously driving vehicle.

The vehicle 10 comprises an environment detection unit 12 which in the present example comprises a radar unit 14, a camera unit 16, a lidar unit 18 and an ultrasound unit 20. The corresponding detection ranges are denoted with a suffix a, i.e. the detection range of the radar unit 14 is denoted 14a, the detection range of the camera unit 16 is denoted 16a, the detection range of the lidar unit 18 is denoted 18a and the detection range of the ultrasound unit 20 is denoted 20a.

In the present example, the radar unit 14 and the camera unit 16 comprise a front device and a rear device. The ultrasound unit 20 comprises four devices, each being attributed to a respective corner of the vehicle 10.

The vehicle also comprises an object recognition unit 22 which is communicatively connected to the environment detection unit 12, i.e. to the radar unit 14, the camera unit 16, the lidar unit 18 and the ultrasound unit 20. Thus, the object recognition unit 22 receives data describing an environment of the vehicle 10 and being captured by the environment detection unit 12 as an input. Based thereon, the object recognition unit 22 is configured for detecting objects in the surroundings of the vehicle 10.

To this end, the object recognition unit 22 comprises an object identification unit 24 and an object classification unit 26. The object identification 24 unit is configured for identifying known objects, in the present example vehicles, houses, crash barriers, lane markings, bushes and street lights. The object classification unit 26 is configured for attributing identified objects to different classes. In the example shown in the figures, the objects are classified into the following classes: traffic participant, infrastructure, moving, and non-moving.

Since the vehicle 10 is an autonomous vehicle, it also comprises an autonomous driving control unit 28 which is communicatively connected to the object recognition unit 22. The autonomous driving control unit 28 is configured for autonomously operating the vehicle 10 as a function of objects in the surroundings of the vehicle 10 being detected by the object recognition unit 22.

It is noted that, of course, the autonomous driving control unit 28 also is connected to other systems of the vehicle 10 for autonomously operating the vehicle 10 in a safe and efficient manner. However, the description of these systems is omitted since they are of minor importance for the present invention.

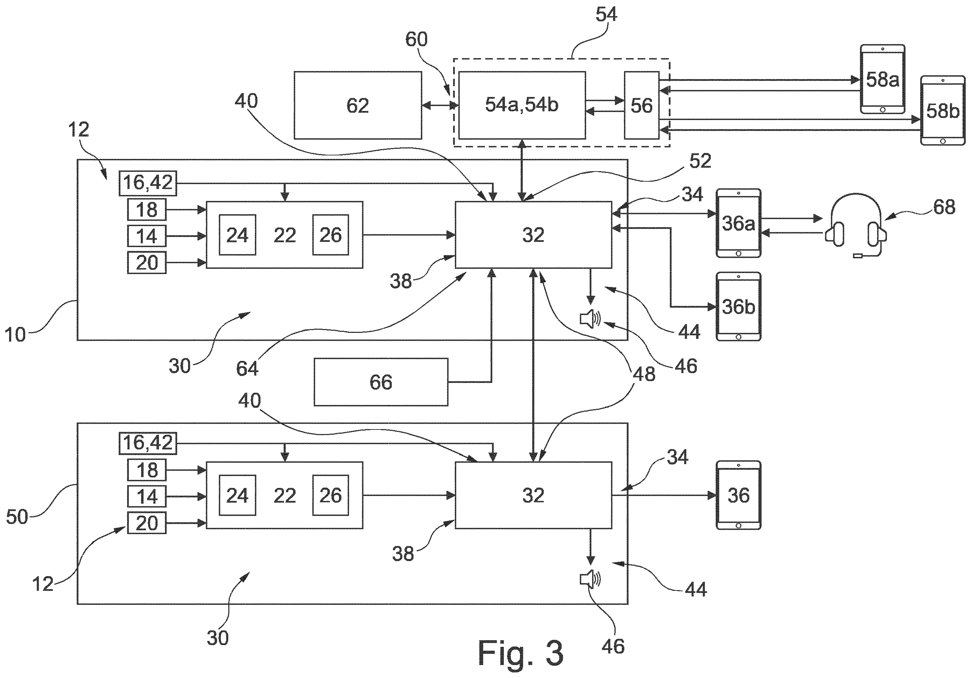

The vehicle 10 also comprises an entertainment system 30 which is shown in more detail in Figures 2 and 3. The entertainment system 30 is configured for providing a video game to an occupant of the vehicle 10. Since in the present example, the vehicle 10 is an autonomous vehicle, it is not necessary to distinguish between a driver and passengers in this context.

The entertainment system 30 comprises the object recognition unit 22.

Consequently, the object recognition unit 22 is shared between the entertainment system and the facilities for autonomous driving.

Moreover, the entertainment system 30 comprises a data processing unit 32 being configured for running a video game software. The data processing unit 32 may therefore also be called a game engine.

Additionally, the entertainment system 30 comprises a first communication interface 34 which is communicatively connected to the data processing unit 32. In the present example, the data processing unit 32 and the first communication interface 34 are formed as a single unit.

The first communication interface 34 is configured for communicatively connecting a plurality of mobile device 36a, 36b to the data processing unit 32.

In the example shown in the figures, the first communication interface 34 is a WiFi interface.

Two exemplary mobile devices 36a, 36b are effectively communicatively connected to the data processing unit 32 via the first communication interface 34, i.e. via WiFi.

In the present example, the mobile devices 36a, 36b are identical smart phones. The mobile device 36a, 36b are shown in detail in Figure 2.

It is noted that the mobile devices 36a, 36b form part of the entertainment system 30 even though the mobile devices 36a, 36b are neither fixedly installed in the vehicle 10 nor attributed to the vehicle 10. Rather the mobile devices 36a, 36b are personal devices of the occupants of the vehicle 10 and carried by them.

The entertainment system 30 also comprises a second communication interface 38 being communicatively connected to the data processing unit 32. Again, the data processing unit 32 and the second communication interface 38 are formed as a single unit.

The object recognition unit 22 is communicatively connected to the data processing unit 32 via the second communication interface 38.

In the example shown in the figures, the object recognition unit 22 is wired to the data processing unit 32.

Thus, via the second communication interface 38 the data processing unit 32 receives data relating to classified and identified objects.

The entertainment system 30 additionally comprises a third communication interface 40 being communicatively connected to the data processing unit 32.

As before, also the third communication interface 40 and the data processing unit 32 are formed as a single unit.

The third communication interface 40 is also communicatively connected to a vision sensor unit 42 of the vehicle 10. In the example shown in the figures, the vision sensor unit 42 is formed by the camera unit 16.

The entertainment system further comprises an audio interface 44.

The audio interface 44 is communicatively connected to the data processing unit 32 and a sound system 46 of the vehicle 10. As before, the audio interface 44 is formed as a single unit together with the data processing unit 32.

Furthermore, the entertainment system 30 comprises a fourth communication interface 48 being communicatively connected to the data processing unit 32 and being configured for communicatively connecting a data processing unit 32 of another vehicle 50 to the data processing unit 32. Thus, the fourth communication interface 48 is a so-called V2V-interface.

In the example of Figure 3, the other vehicle 50 is substantially identical to the vehicle 10. The same reference signs are used for corresponding elements even though they are located in different vehicles 10, 50.

The entertainment system 30 of the vehicle 10 also comprises a fifth communication interface 52 being communicatively connected to the data processing unit 32. Again, the data processing unit 32 and the fifth communication interface 52 are formed as a single unit.

Furthermore, the entertainment system 30 comprises a cloud unit 54 which is communicatively connected to the data processing unit 32 via the fifth communication interface 52.

The cloud unit 54 comprises a cloud storage unit 54a and a cloud computing unit 54b which are represented as an integrated unit in Figure 3.

Moreover, the cloud unit 54 comprises a first cloud interface 56 being configured for communicatively connecting a computing device 58a, 58b being located outside the vehicle 10 to the cloud unit 54. In the example of Figure 3, two computing devices 58a, 58b are represented. The computing devices 58a, 58b are smart phones.

For connecting the computing devices 58a, 58b to the cloud unit 54, the first cloud interface 56 is formed as an application programming interface (API).

Moreover, the cloud unit 54 comprises a second cloud interface 60.

The second cloud interface 60 is configured for communicatively connecting a game provider system 62 to the cloud unit 54.

In the example of Figure 3 a game provider system 62 is effectively connected to the cloud unit 54 via the second cloud interface 60.

Additionally, the entertainment system 30 comprises a sixth communication interface 64 being communicatively connected to the data processing unit 32 and being configured for communicatively connecting a third party system 66 to the data processing unit 32.

In the example shown in the figures, the third party system 66 is a weather data provider. Thus, via the sixth communication interface 64 weather data may be provided to the data processing unit 32.

The sixth communication interface 64 may be designated a X2V-interface.

In the example of Figure 3, the sixth communication interface 64 and the fourth communication interface 48 are represented as separate interface. However, it is also possible to form the sixth communication interface 64 and the fourth communication interface 48 as a single interface.

As has been mentioned before, the entertainment system 30 is configured for providing a video game to the occupants of the vehicle 10. This will be explained in connection with two exemplary occupants, one of them carrying mobile device 36a and one of them carrying mobile device 36b. The occupant using mobile device 36a has connected a headset 68 thereto.

Thus, mobile device 36a may receive voice signals provided by the headset 68 and the headset is used as an audio output of the mobile device 36a.

When the occupants carrying the mobile devices 36a, 36b are inside the vehicle 10, the mobile devices are connected with the data processing unit 32 via WiFi. Thus, the mobile devices 36a, 36b can receive audio and video content being provided by the data processing unit 32 via the first communication interface 34 and the data processing unit 32 may receive control commands which are generated by the mobile devices 36a, 36b. This also happens via the first communication interface 34.

The occupants carrying mobile devices 36a, 36b can play a video game being provided by running a video game software on the data processing unit 32. This may be done in a multiplayer setting.

In the present example, the video game is a cart racing game wherein two carts 70a, 70b, each thereof being attributed to a player race on a highway 72 (cf. Figure 2).

The surroundings of the highway 72 in the video game comprise houses 74.

In the present example, these houses 74 correspond to houses being present in the real-world environment of the vehicle 10.

These houses 74 have been detected by the environment detection unit 12, identified as houses by the object identification unit 24 of the object recognition unit 22 and classified by the object classification unit 26 as non-moving infrastructure.

Also the vehicles 76 forming part of the video game (cf. Figure 2) correspond to vehicles being present in the real-world environment of the vehicle 10.

The vehicles 76 have been detected by the environment detection unit 12, identified as vehicles by the object identification unit 24 of the object recognition unit 22 and classified by the object classification unit 26 as moving traffic participants.

In the graphical user interface of the mobile devices 36a, 36b the houses 74 and the vehicles 76 are represented using corresponding images taken with the vision sensor unit 42. Thus, the houses 74 and the vehicles 76 in the video game have the same optical appearance as their real-world counterparts.

When the video game is terminated, the game scores of the occupants may be stored in the cloud storage unit 54a and may be compared to scores from the past by using the cloud computing unit 54b. Thus, a ranking may be provided by the cloud unit 54.

If the occupants carrying mobile devices 36a, 36b wish to play a video game that is not available on the data processing unit 32, they have the possibility to download a video game being provides by a game provider system 62 via the cloud unit 54 and the fifth communication interface 52.

Also players being external to the vehicle 10 and carrying computing devices 58a, 58b may participate in the video game. In the present example, four players may play in a multiplayer setting.

Moreover, in the graphical user interface of the video game as shown in figure 2, the sky may be represented as being cloudy. This is due to the fact that the data processing unit receives weather data from the third party system 66 indicating that the weather is cloudy.

Thus, the occupants carrying the mobile devices 36a, 36b are well entertained during their ride in the autonomous vehicle 10. Moreover, due to the fact that elements from the real-world surrounding of the vehicle 10 are represented in the graphical user interface of the video game, they are not prone to being car sick or motion sick.

In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. A computer program such as the video game software may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: environment detection unit
- 14: radar unit
- 14a: detection range of the radar unit
- 16: camera unit
- 16a: detection range of the camera unit
- 18: lidar unit
- 18a: detection range of the lidar unit
- 20: ultrasound unit
- 20a: detection range of the ultrasound unit
- 22: object recognition unit
- 24: object identification unit
- 26: object classification unit
- 28: autonomous driving control unit
- 30: entertainment system
- 32: data processing unit
- 34: first communication interface
- 36: mobile device
- 36a: mobile device
- 36b: mobile device
- 38: second communication interface
- 40: third communication interface
- 42: vision sensor unit
- 44: audio interface
- 46: sound system
- 48: fourth communication interface
- 50: vehicle
- 52: fifth communication interface
- 54: cloud unit
- 54a: cloud storage unit
- 54b: cloud computing unit
- 56: first cloud interface
- 58a: computing device
- 58b: computing device
- 60: second cloud interface
- 62: game provider system
- 64: sixth communication interface
- 66: third party system
- 68: headset
- 70a: cart
- 70b: cart
- 72: highway
- 74: house
- 76: vehicle

## Claims

1. An entertainment system (30) for a vehicle (10), the entertainment system (30) being configured for providing a video game to an occupant of the vehicle (10), the entertainment system (30) comprising:
- a data processing unit (32) being configured for running a video game software,
- a first communication interface (34) being communicatively connected to the data processing unit (32) and being configured for communicatively connecting a mobile device (36a, 36b) to the data processing unit (32), and
- a second communication interface (38) being communicatively connected to the data processing unit (32),
**characterized**
**in that** the second communication interface (38) is configured for communicatively connecting an object recognition unit (22) of the vehicle (10) to the data processing unit (32), in that an object recognition unit (22) is communicatively connected to the second communication interface (38), and
**in that** the object recognition unit (22) comprises an object identification unit (24) configured to provide identification data related to recognized objects and/or an object classification unit (26) configured to provide classification data related to recognized objects, wherein the identification data and/or the classification data may be received by the data processing unit (32) via the second communication interface (38) such that the recognized objects may be used within the video game.

2. The entertainment system (30) of claim 1, wherein the object recognition unit (22) is communicatively connected to an environment detection unit (12).

3. The entertainment system (30) of any one of the preceding claims, comprising a third communication interface (40) being communicatively connected to the data processing unit (32) and being configured for communicatively connecting a vision sensor unit (42) of the vehicle (10) to the data processing unit (32).

4. The entertainment system (30) of claim 3, further comprising a vision sensor unit (42) being communicatively connected to the third communication interface (40).

5. The entertainment system (30) of any one of the preceding claims, wherein the first communication interface (34) is configured for communicatively connecting a plurality of mobile devices (36a, 36b) to the data processing unit (32) or wherein the entertainment system (30) comprises a plurality of first communication interfaces (34).

6. The entertainment system (30) of any one of the preceding claims, comprising at least one mobile device (36a, 36b) being communicatively connected to the data processing unit (32) via the first communication interface (34).

7. The entertainment system (30) of any one of the preceding claims, comprising a fourth communication interface (48) being communicatively connected to the data processing unit (32) and being configured for communicatively connecting a data processing unit (32) of another vehicle (50) to the data processing unit (32) of the vehicle (10).

8. The entertainment system (30) of any one of the preceding claims, comprising a fifth communication interface (52) being communicatively connected to the data processing unit (32) and being configured for communicatively connecting a cloud unit (54) to the data processing unit (32).

9. The entertainment system (30) of claim 8, comprising a cloud unit (54) being communicatively connected to the data processing unit (32) via the fifth communication interface (52).

10. The entertainment system (30) of claim 9, wherein the cloud unit (54) comprises a first cloud interface (56) being configured for communicatively connecting a computing device (58a, 58b) being located outside the vehicle (10) to the cloud unit (54).

11. The entertainment system (30) of claim 9 or claim 10, wherein the cloud unit (54) comprises a second cloud interface (60) being configured for communicatively connecting a game provider system (62) to the cloud unit (54).

12. The entertainment system (30) of any one of the preceding claims, comprising a sixth communication interface (64) being communicatively connected to the data processing unit (32) and being configured for communicatively connecting a third party system (66) to the data processing unit (32).

13. A vehicle (10) comprising an entertainment system (30) according to any one of the preceding claims.

## Patentansprüche

1. Unterhaltungssystem (30) für ein Fahrzeug (10), wobei das Unterhaltungssystem (30) so ausgelegt ist, dass es für einen Insassen des Fahrzeugs (10) ein Videospiel bereitstellt, wobei das Unterhaltungssystem (30) Folgendes umfasst:
- eine Datenverarbeitungseinheit (32), die so ausgelegt ist, dass sie eine Videospielsoftware ausführt,
- eine erste Datenübertragungsschnittstelle (34), die zur Datenübertragung mit der Datenverarbeitungseinheit (32) verbunden und so ausgelegt ist, dass sie zur Datenübertragung ein Mobilgerät (36a, 36b) mit der Datenverarbeitungseinheit (32) verbindet, und
- eine zweite Datenübertragungsschnittstelle (38), die zur Datenübertragung mit der Datenverarbeitungseinheit (32) verbunden ist,
**dadurch gekennzeichnet,**
**dass** die zweite Datenübertragungsschnittstelle (38) so ausgelegt ist, dass sie zur Datenübertragung eine Objekterkennungseinheit (22) des Fahrzeugs (10) mit der Datenverarbeitungseinheit (32) verbindet,
**dass** eine Objekterkennungseinheit (22) zur Datenübertragung mit der zweiten Datenübertragungsschnittstelle (38) verbunden ist, und
**dass** die Objekterkennungseinheit (22) eine Objektidentifizierungseinheit (24), die so ausgelegt ist, dass sie Identifizierungsdaten bereitstellt, die erkannte Objekte betreffen und/oder eine Objektklassifizierungseinheit (26) umfasst, die so ausgelegt ist, dass sie Klassifizierungsdaten bereitstellt, die erkannte Objekte betreffen, wobei die Identifizierungsdaten und/oder die Klassifizierungsdaten von der Datenverarbeitungseinheit (32) über die zweite Datenübertragungsschnittstelle (38) empfangen werden können, so dass die erkannten Objekte im Videospiel genutzt werden können.

2. Unterhaltungssystem (30) nach Anspruch 1, wobei die Objekterkennungseinheit (22) zur Datenübertragung mit einer Umgebungserfassungseinheit (12) verbunden ist.

3. Unterhaltungssystem (30) nach einem der vorhergehenden Ansprüche, umfassend eine dritte Datenübertragungsschnittstelle (40), die zur Datenübertragung mit der Datenverarbeitungseinheit (32) verbunden ist und so ausgelegt ist, dass sie zur Datenübertragung eine optische Sensoreinheit (42) des Fahrzeugs (10) mit der Datenverarbeitungseinheit (32) verbindet.

4. Unterhaltungssystem (30) nach Anspruch 3, umfassend ferner eine optische Sensoreinheit (42), die zur Datenübertragung mit der dritten Datenübertragungsschnittstelle (40) verbunden ist.

5. Unterhaltungssystem (30) nach einem der vorhergehenden Ansprüche, wobei die erste Datenübertragungsschnittstelle (34) so ausgelegt ist, dass sie eine Mehrzahl von Mobilgeräten (36a, 36b) zur Datenübertragung mit der Datenverarbeitungseinheit (32) verbindet oder wobei das Unterhaltungssystem (30) eine Mehrzahl erster Datenübertragungsschnittstellen (34) umfasst.

6. Unterhaltungssystem (30) nach einem der vorhergehenden Ansprüche, umfassend wenigstens ein Mobilgerät (36a, 36b), das zur Datenübertragung mit der Datenverarbeitungseinheit (32) über die erste Datenübertragungsschnittstelle (34) verbunden ist.

7. Unterhaltungssystem (30) nach einem der vorhergehenden Ansprüche, umfassend eine vierte Datenübertragungsschnittstelle (48), die zur Datenübertragung mit der Datenverarbeitungseinheit (32) verbunden ist und so ausgelegt ist, dass sie zur Datenübertragung eine Datenverarbeitungseinheit (32) eines weiteren Fahrzeugs (50) mit der Datenverarbeitungseinheit (32) des Fahrzeugs (10) verbindet.

8. Unterhaltungssystem (30) nach einem der vorhergehenden Ansprüche, umfassend eine fünfte Datenübertragungsschnittstelle (52), die zur Datenübertragung mit der Datenverarbeitungseinheit (32) verbunden ist und so ausgelegt ist, dass sie zur Datenübertragung eine Cloud-Einheit (54) mit der Datenverarbeitungseinheit (32) verbindet.

9. Unterhaltungssystem (30) nach Anspruch 8, umfassend eine Cloud-Einheit (54), die zur Datenübertragung mit der Datenverarbeitungseinheit (32) über die fünfte Datenübertragungsschnittstelle (52) verbunden ist.

10. Unterhaltungssystem (30) nach Anspruch 9, wobei die Cloud-Einheit (54) eine erste Cloud-Schnittstelle (56) umfasst, die so ausgelegt ist, dass sie zur Datenübertragung eine Rechenvorrichtung (58a, 58b), die sich außerhalb des Fahrzeugs (10) befindet, mit der Cloud-Einheit (54) verbindet.

11. Unterhaltungssystem (30) nach Anspruch 9 oder Anspruch 10, wobei die Cloud-Einheit (54) eine zweite Cloud-Schnittstelle (60) umfasst, die so ausgelegt ist, dass sie zur Datenübertragung ein Spielebereitstellungssystem (62) mit der Cloud-Einheit (54) verbindet.

12. Unterhaltungssystem (30) nach einem der vorhergehenden Ansprüche, umfassend eine sechste Datenübertragungsschnittstelle (64), die zur Datenübertragung mit der Datenverarbeitungseinheit (32) verbunden ist und so ausgelegt ist, dass sie zur Datenübertragung ein Drittanbietersystem (66) mit der Datenverarbeitungseinheit (32) verbindet.

13. Fahrzeug (10), umfassend ein Unterhaltungssystem (30) nach einem der vorhergehenden Ansprüche.

## Revendications

1. Système de divertissement (30) pour un véhicule (10), le système de divertissement (30) étant configuré pour fournir un jeu vidéo à un occupant du véhicule (10), le système de divertissement (30) comprenant :
- une unité de traitement de données (32) configurée pour exécuter un logiciel de jeu vidéo,
- une première interface de communication (34) connectée de manière communicative à l'unité de traitement de données (32) et configurée pour connecter de manière communicative un dispositif mobile (36a, 36b) à l'unité de traitement de données (32), et
- une deuxième interface de communication (38) connectée de manière communicative à l'unité de traitement de données (32),
**caractérisé en ce**
**que** la deuxième interface de communication (38) est configurée pour connecter de manière communicative une unité de reconnaissance d'objets (22) du véhicule (10) à l'unité de traitement de données (32),
en ce qu'une unité de reconnaissance d'objets (22) est connectée de manière communicative à la deuxième interface de communication (38), et
en ce que l'unité de reconnaissance d'objets (22) comprend une unité d'identification d'objets (24) configurée pour fournir des données d'identification relatives à des objets reconnus et/ou une unité de classification d'objets (26) configurée pour fournir des données de classification relatives à des objets reconnus, dans lequel les données d'identification et/ou les données de classification peuvent être reçues par l'unité de traitement de données (32) via la deuxième interface de communication (38) de telle sorte que les objets reconnus puissent être utilisés dans le jeu vidéo.

2. Système de divertissement (30) selon la revendication 1, dans lequel l'unité de reconnaissance d'objets (22) est connectée de manière communicative à une unité de détection d'environnement (12).

3. Système de divertissement (30) selon l'une quelconque des revendications précédentes, comprenant une troisième interface de communication (40) connectée de manière communicative à l'unité de traitement de données (32) et configurée pour connecter de manière communicative une unité de capteur de vision (42) du véhicule (10) à l'unité de traitement de données (32).

4. Système de divertissement (30) selon la revendication 3, comprenant en outre une unité de capteur de vision (42) connectée de manière communicative à la troisième interface de communication (40).

5. Système de divertissement (30) selon l'une quelconque des revendications précédentes, dans lequel la première interface de communication (34) est configurée pour connecter de manière communicative une pluralité de dispositifs mobiles (36a, 36b) à l'unité de traitement de données (32) ou dans lequel le système de divertissement (30) comprend une pluralité de premières interfaces de communication (34).

6. Système de divertissement (30) selon l'une quelconque des revendications précédentes, comprenant au moins un dispositif mobile (36a, 36b) connecté de manière communicative à l'unité de traitement de données (32) via la première interface de communication (34).

7. Système de divertissement (30) selon l'une quelconque des revendications précédentes, comprenant une quatrième interface de communication (48) connectée de manière communicative à l'unité de traitement de données (32) et configurée pour connecter de manière communicative une unité de traitement de données (32) d'un autre véhicule (50) à l'unité de traitement de données (32) du véhicule (10).

8. Système de divertissement (30) selon l'une quelconque des revendications précédentes, comprenant une cinquième interface de communication (52) connectée de manière communicative à l'unité de traitement de données (32) et configurée pour connecter de manière communicative une unité de cloud (54) à l'unité de traitement de données (32).

9. Système de divertissement (30) selon la revendication 8, comprenant une unité de cloud (54) connectée de manière communicative à l'unité de traitement de données (32) via la cinquième interface de communication (52).

10. Système de divertissement (30) selon la revendication 9, dans lequel l'unité de cloud (54) comprend une première interface de cloud (56) configurée pour connecter de manière communicative un dispositif informatique (58a, 58b) situé à l'extérieur du véhicule (10) à l'unité de cloud (54) .

11. Système de divertissement (30) selon la revendication 9 ou la revendication 10, dans lequel l'unité de cloud (54) comprend une deuxième interface de cloud (60) configurée pour connecter de manière communicative un système de fournisseur de jeux (62) à l'unité de cloud (54).

12. Système de divertissement (30) selon l'une quelconque des revendications précédentes, comprenant une sixième interface de communication (64) connectée de manière communicative à l'unité de traitement de données (32) et configurée pour connecter de manière communicative un système tiers (66) à l'unité de traitement de données (32).

13. Véhicule (10) comprenant un système de divertissement (30) selon l'une quelconque des revendications précédentes.
